# EUROPEAN PATENT SPECIFICATION

(11) **EP 1 812 265 B1**
(45) Date of publication and mention of the grant of the patent: **16.04.2014**
(21) Application number: 05801371.5
(22) Date of filing: 29.09.2005
(51) Int. Cl.: B60R 19/18

(54) **IMPACT ABSORBING DEVICE WITH TAPE-LIKE DEVICE ATTACHED**
VERFAHREN ZUR ERHÖHUNG DER SCHLAGFESTIGKEIT UND STOSSABSORBIERENDE ANORDNUNG
PROCÉDÉ POUR AUGMENTER LA RÉSISTANCE AUX CHOCS D'UN AMORTISSEUR DE CHOCS

(30) Priority: 03.11.2004 EP 04105472
(43) Date of publication of application: 01.08.2007
(73) Proprietor: NV Bekaert SA, 8550 Zwevegem (BE)
(72) Inventor: DEKEYSER, Willem, B-8310 ASSEBROEK (BE); LOKERE, Erwin, B-8500 KORTRIJK (BE); GALLENS, Jeroen, B-8500 KORTRIJK (BE)
(74) Representative: Messely, Marc
(86) International application number: PCT/EP2005/054908
(87) International publication number: WO 2006/048359

(56) References cited:
- EP-A- 0 595 607
- EP-A- 1 342 623
- WO-A-01/44549
- GB-A- 518 074
- US-A- 5 290 079

## Description

### Field of the invention

The present invention relates to a method to manufacture an impact absorbing device, such as a vehicle bumper beam and a vehicle door beam. The invention also relates to the impact absorbing device thus obtained.

### Background of the invention

Impact absorbing devices such as impact absorbing bumper or door beams are well known in the art.

At present, such impact absorbing devices may be provided out of a matrix being a metal such as steel or aluminum. Such metal impact absorbing devices have the drawback of being heavy, which is a disadvantage when to be used for automotive or transport applications. Due to their production method they are not flexible towards function integration. The weight causes additional fuel consurrptien as the weight is to be carried along with the vehicle.

An alternative for such heavy impact absorbing devices is found in the use of composite material as matrix material, usually glass fiber, aramid fibers, high modulus PET fibers or C-fiber reinforced polymers. Such composite articles have the disadvantage of possible scattering into small parts once they are subjected to significant impact. In spite of the fact that under such significant impacts, the vehicle may be preserved from damage, the parts of polymer material scattered from the broken impact absorbing device may cause on its turn damage to parts of the vehicle being present behind the impact absorbing device, such as e.g. puncture of the gasoline tank or damage to the motor block.

Even more, once a fiber reinforced composite has been subjected to some load, small cracks may occur, which cracks decrease the safety and absorbing property of the impact absorbing device to a large extent. Usually, once subjected to some impact force, the whole impact absorbing device is to be replaced due to safety reasons.

The use of elongated metal elements such as metal wire or metal cords, e.g. steel wire or steel cords, as such or in the form of a woven grid such as from US-A-5290079, as additional reinforcement to the composites out of polymer matrix and glass or C-fibers, is also known.

The design and manufacturing of such metal wire or metal cord reinforced impact absorbing means, envisages however some problems. As an example, the fixation of the elongated metal elements in the device during press molding of the device, may cause difficulties. Also the beam should be designed to have no undercuts, to make them moldable, what limits strongly the design freedom of such type of reinforced beams.

Also, in case one is willing to replace an existing impact absorbing device out of metal or out of composite material by a metal reinforced composite impact absorbing device, such replacement causes the matrix volume of the impact absorbing device to be redesigned, causing new press molds to be designed and produced, and many more technical and economical problems.

### Summary of the invention

It is an object of the present invention to avoid the problems of the prior art.
It is a further object of the present invention to increase the impact resistance of impact absorbing devices, without the necessity to redesign the matrix volume of the impact absorbing device.
It is also an object of the present invention to partially restore and increase the impact resistance of impact absorbing devices which have been subjected to impact forces, which did not cause rupture of the whole device.
It is yet another object of the present invention to provide a method to avoid scattering of the matrix volume of existing composite impact absorbing devices, such as glass- or C-fiber reinforced polymer impact absorbing devices.
It is another object of the present invention to increase the part integrity of impact absorbing devices, in case such have been subjected to an impact force.
It is further an object of the present invention to provide an increase of energy absorption capacity of impact absorbing devices.
It is further an object of the present invention to provide an increase of energy absorption capacity of impact absorbing devices without the necessity to redesign the matrix volume of the impact absorbing device.
It is finally an object of the present invention to provide a method to generate more design freedom in producing reinforced beams.

According to a first aspect of the invention, there is provided a method to manufacture an impact absorbing device as claimed in accordance with claim 1.

The two-step approach, namely first press-molding the matrix volume and thereafter attaching the tape-like device allow to reach more complex structures which cannot be made by means of a single press-molding operation.

The presence of elongate metal elements, such as metal steel wire or metal cords such as metal steel wire and metal steel cords, provide additional impact absorption to the existing matrix volume of the impact absorbing device. However, the re-design of the whole impact absorbing device is avoided.
It is understood that the matrix volume as such may serve as an impact absorbing device itself. Attaching a tape like device to the matrix volume increases the impact resistance to the matrix volume and improves the impact absorbing capacity of the matrix volume. In case the matrix volume has been used as impact absorbing device as such, and in case the matrix volume has been subjected to an impact force, causing minor ruptures of the matrix, the attaching of a tape-like device may restore the impact absorbing capacity and resistance to required levels. It so-to-say restores the impact absorbing characteristics of the matrix volume to at least its original level. It is understood that the tape like device may be attached to the matrix volume, so increasing the impact resistance to the matrix volume and improves the impact absorbing capacity of the matrix volume prior to use of the impact beam, e.g. in case the requested impact absorbing capacity is to be increased due to changing legislation, or changing expectancy.

By making a choice in mechanical properties of the elongated metal elements , such as Young's modulus, elongation under specific load, number of elongated metal elements in the tape-like device, specific strength of the used metal alloy, coating type, which coating may influence the adhesion between the elements and polymer matrix, mechanical anchoring, flexibility, such choice may provide an increase of the impacts resistance without being obliged to change the design dimensions of the matrix volume of the impact absorbing device. The interaction of the matrix volume of the impact absorbing device with the elongated metal elements is not to be taken into account during production of the matrix volume.
Additionally, by attaching in a separate step of the production phase a tape-like device to an impact absorbing device, it becomes possible to have impact absorbing devices with complex structures, e.g. with so-called undercuts. As an example, a U-shaped matrix volume of an impact absorbing device can be foreseen from a tape-like device, being attached to the two extremes of the U-shape, so providing a substantially hollow rectangular impact absorbing device. Such devices cannot be made using a single press-molding process step.

The matrix volume may be made of different possible matrices, such as aluminum or out of a polymer matrix, such as thermoplastic polymers e.g. polyolefins, polyamides, polyethylene, polypropylene, polyesters, polycarbonates, polyacetals, polysulfones, polyether ketones, polyimides and polyether imides, or thermoset polymers such as polyesters. This polymer matrix of the impact absorbing device may further comprise reinforcing material such as glass fibers, C-fibers or any other reinforcing fiber, either man-made fibers or natural fibers, either random or oriented in woven or other sheets. As an example, LFT - and GMT-polymer matrices may be used.

In order to benefit most of the impact improvements due to the presence of the tape-like device comprising elongated metal elements, the elongated metal elements are preferably present substantially parallel to the impact surface of the impact absorbing device.
The impact surface of the impact absorbing is to be understood as the surface of the impact absorbing device, on which impact forces are to apply during use of the device.

Preferably, the shearing strength between the tape-like device and the matrix volume of the impact absorbing device is larger than the cohesion strength of the matrix volume of the impact absorbing device. This to provide the additional advantage that in case the impact absorbing device is subjected to a too high impact load, parts of the matrix volume which would scatter from the impact absorbing device, may still adhere to the tape-like device. Scattering of parts may be avoided to a large extent.

Typical for impact absorbing devices with the shearing strength between the tape-like device and the matrix volume of the impact absorbing device being larger than the cohesion strength of the matrix volume of the impact absorbing device, is the failure system which is noticed when these impact absorbing devices are subjected to a three point bending test.

The impact absorbing device is placed on two supporting points, being rods with radius 30mm, and the axes of these rods are on an distance of 900mm from each other. The impact surface of the impact absorbing device is directed away from the supporting rods. A force is execute in the middle of the distance between these two rods, by means of a tubular curved surface with radius 135mm. The force is executed until failure of the impact absorbing device.
The failure system which is noticed in case the shearing strength between the tape-like device and the matrix volume of the impact absorbing device is larger than the cohesion strength of the matrix volume of the impact absorbing device, is that the matrix volume is cracked or broken, causing failure of the impact absorbing device, whereas the attachment of tape like device and matrix volume remains intact.

As at the moment of failure, the shearing strength has not been reached, the tape-like device and the parts of the impact absorbing device will still cohere, resulting in no or fewer parts being scattered. The part integrity will be realized and the scattering of parts will be avoided to a large extent.
In case the shearing strength exceeds the cohesion strength, the tape-like device will not come loose prior to rupture of the impact absorbing device;

Possibly the elongated metal elements are provided by means of a woven fabric, such as e.g. in WO-A1-01/44549, hereby incorporated by reference. It is understood that the elongated metal elements may be present either in warp and/or weft direction. The tape-like product as used in the invention method preferably comprises additional polymer matrix material, which is substantially enveloping the elongated metal elements. This may be obtained in many different ways, e.g. by extrusion of a polymer matrix coating around the elongated metal elements, or by laminating the elongated metal elements between two or more layers of polymer sheet or by a hotdip process, by co-extrusion or pulltrusion.

For the polymer matrix material, all thermoplastic polymers are suitable, as an example polyolefins, polyamides, polyethylene, polypropylene, polyesters, polycarbonates, polyacetals, polysulfones, polyether ketones, polyimides and polyether imides.

Possibly, the tape-like device additionally comprise glass- or C-fibers, as short fibers, or as uni-or multidirectional woven or nonwoven felt. Such fibers may also be present as short fibers in the polymer matrix material.

Attachment between impact absorbing device and tape-like device may be obtained in many different ways. The tape-like device may be glued to the surface of the impact absorbing device, using e.g. contact glues, hot melt glues, glue-tapes, bi-component glues, epoxy adhesives, poly-functional silanes or any other type of glues. Alternatively, the tape-like device and the matrix volume of the impact absorbing device may be attached to each other by means of ultrasonic or high frequent welding. The tape-like device may be attached to the matrix volume of the impact absorbing device by bolts and nuts or screws, staples, rivets clips or any other means alike.

As an alternative, in case the tape-like device comprises thermoplastic polymer matrix material, attachment can be obtained by first heating the polymer matrix material to partially melt or soften the polymer matrix, and subsequently bringing the partially melted or softened polymer matrix material in contact wit the surface of the matrix volume of the impact absorbing device, where the polymer matrix material is cooled to solidify and attached to the surface of the volume matrix of the impact absorbing means. Preferably some pressure is used during this step.
Alternatively, in case the volume matrix of the impact absorbing device is provided out of material that can be molten, the surface of the matrix volume on which the tape-like device is to be attached, may be subjected to heat in order to melt or soften partially this matrix of the impact absorbing means. Subsequently, the tape-like device is brought into contact with the partially molten or softened matrix of the impact absorbing device. Preferably some pressure is used during this step.
As an example, flame, laser or plasma heating may be used.

Prior to attaching , such as by heating or gluing, the surface of the volume matrix of the impact absorbing device and/or the tape-like device may be roughened to obtain better attachment. This may e.g. be done by mechanical or chemical abrasion, e.g. etching with sulfuric or chromic acids, or e.g. by means of corona or plasma etching.

According to the present invention, elongated metal element may be metal wires or metal cords comprising metal wires.

The metal wires may have a diameter, being a diameter of a radial cross section of the metal elements, which is equal or larger than 100 µm, more preferred larger than 125 µm e.g. more than 150 µm or even more than 175 µm. All possible metal alloys may be used to provide the metal wires. Possibly, oil hardened steel wires are used.

More preferably, metal cord are used in the tape-like device for use in an impact absorbing device. Most preferred are metal cords of a type which can absorb relatively high amounts of impact energy. However also other metal cords may be used.

Examples here are:
- multi-strand metal cords e.g. of the m x n type, i.e. metal cords, comprising m strands with each n wires, such as 4x7x0.10 or 3x3x0.18 ; the last number is the diameter of each wire, expressed in mm.
- compact cords, e.g. of the 1 x n type, i.e. metal cords comprising n metal wires, n being greater than 8, twisted in only one direction with one single step to a compact cross-section, such as 1x9x0.18 or 1x12x0.18; the last number is the diameter of each wire, expressed in mm.
- layered metal cords e.g. of the I + m (+ n) type, i.e. metal cords with a core of I wires, surrounded by a layer of m wires, and possibly also surrounded by another layer of n wires , such as 2+4x0.18; the last number is the diameter of each wire, expressed in mm. Other examples are 0.20+18x0.175, 0.365+6x0.35 or 3x0.24+9x0.225.
- single strand metal cords e.g. of the 1 x m type, i.e. metal cords comprising m metal wires, m ranging from two to six, twisted in one single step, such as 1x4x0.25; the last number is the diameter of each wire, expressed in mm.
- open metal cords e.g. of the m+n type, i.e. metal cords with m parallel metal wires surrounded by n metal wires, such as disclosed in US-A-4408444, e.g. a metal cord 2+2x0.25; the last number is the diameter of each wire, expressed in mm.

All cords as described above can be equipped with one or more spiral wrapped wires to increase the mechanical bond of the cords in the polymer matrix of the polymer material being part of the tape-like device, and/or to bundle the n single parallel crimped or non-crimped but plastically deformed wires if the cord is provided using such parallel wires.
Preferably however, the metal cord used in the context of the present invention may be a metal cord with a high elongation at fracture, i.e. an elongation exceeding 4 %, e.g. an elongation between 5% and 10%. High elongation metal cord has more capacity to absorb energy.
Such a metal cord is:
- either a high-elongation or elongation metal cord (HE-cords), i.e. a multi-strand or single strand metal cord with a high degree of twisting (in case of multi-strand metal cords : the direction of twisting in the strand is equal to the direction of twisting of the strands in the cord : SS or ZZ, this is the so-called Lang's Lay) in order to obtain an elastic cord with the required degree of springy potential ;
   an example is a 3x7x0.22 High Elongation metal cord with lay lengths 4.5 mm and 8 mm in SS direction;
- or a metal cord which has been subjected to a stress-relieving treatment such as disclosed in EP-A1-0 790 349 ; an example is a 2x0.33 + 6x0.33 SS cord.
- as an alternative or in addition to a high elongation metal cord, the metal cord may be composed of one or more wires which have been plastically deformed so that they are wavy. This wavy nature additionally increases the elongation. An example of a wavy pattern is a helix or a spatial crimp such as disclosed in WO-A1-99/28547.
- high impact cords such as e.g. 5x0.38.

With respect to the required properties of the tape-like device, all metal cords may be identical, or alternatively, different metal cords may be used to constitute the tape-like device.

The metal wires used to provide these metal cords may have a diameter, being a diameter of a radial cross section of the metal wires, which is equal or larger than 100 µm, more preferred larger than 125 µm e.g. more than 150 µm or even more than 175 µm. All metal wires of a metal cord may have the same diameter, or the diameters of the metal wires may differ from each other. Preferably, the optical diameter of the metal cord is larger than 200 µm, or even larger than 250 µm, such as larger than 300 µm or more. The optical diameter of the metal cord is to be understood as the diameter of the smallest imaginary circle, encompassing the radial cross section of the metal cord.

Most preferably steel cords are used in the invention. Presently known steel alloys may be used to provide the steel cords. Preferably, the steel cords are subjected to a stress relieving thermal treatment, e.g. by passing the steel cord through a high-frequency or mid-frequency induction coil of a length that is adapted to the speed of the steel cord during production. It was observed that, increasing the temperature to more than 400°C for a certain period of time, a decrease in tensile strength of the steel cord (a reduction of approximately 10%), but at the same time, an increase of the plastic elongation of the cord before rupture of more than 6% may be obtained. Such steel cords are hereafter referred to as stress relieved steel cords.

Possibly, the elongated metal elements may be coated with a polymer coating layer, such as a layer out of e.g. polyolefin, polyamide, polyethylene, polypropylene, thermoplastic polyester, polycarbonate, polyacetal, polysulfone, polyether ketone, polyimide or polyether imide.

The tape-like device is attached to the impact absorbing device in such a way that the elongated metal elements are substantially parallel to the impact surface of the impact absorbing device.

The term 'impact surface' is to be understood as the surface on which impact forces are intended to act when the impact absorbing device is in use.

The tape-like product may be attached to the impact surface. Preferably however, the tape-like product is attached to the surface of the impact absorbing device, opposite to this impact surface. This because in such circumstances, the elongated metal elements will be brought under tension in case impact forces act on the impact surface. In such circumstances, the elongated metal elements will provide the largest increase of impact resistance to the impact absorbing means. In a possible embodiment, the tape is placed at both sides of the impact absorbing device (sandwich structure). The tape can be the same or may comprise another cord composition. This in function of the required properties in the compression and the tensile zone.

Tape -like devices may also be provided at the other surfaces of the impact absorbing device.
In an embodiment, the tape is placed over the total length of the matrix volume of the impact absorbing device. The tape can be fixed on the crash cone, e.g. by means of bolts. In another embodiment the tape can be placed on a part of the length of the volume matrix of the impact absorbing device. This is function from desired requirements and limitation of weight.

An impact absorbing device having increased impact resistance, is characterized by a matrix volume, and a tape-like device which is attached to the matrix volume at an outer surface of the matrix volume.

The matrix volume may be provided out of different materials. The tape-like device is attached to this matrix volume at at least one outer side of the matrix volume, so providing an interface between matrix volume and tape-like device. This interface may comprise a glue which is to attach the matrix volume and the tape-like device. The interface may be characterized by comprising a layer of melted and re-solidified polymer, either resulting from melting and solidifying of the volume of the matrix, or resulting from melting and solidifying of the polymer matrix of the tape-like device.

The impact absorbing device with increased impact resistance may be used for several applications. As an example, vehicle bumper beams or vehicle door beams are impact absorbing devices of which the impact resistance may be increased by the invention method. Alternative uses are e.g. cross-car beams, A-pillars, B-pillars or C-pillars in vehicles.

### Brief description of the drawings

The invention will now be described into more detail with reference to the accompanying drawings wherein
- FIGURE 1a and FIGURE 1b show schematically a U-shape GMT-impact absorbing means which comprises a polymer matrix volume and a tape-like device attached to the polymer matrix volume.
- FIGURE 2 shows the test setup of an impact absorbing means.
- FIGURE 3 shows the loading curve of the GMT-impact absorbing means of FIGURE 1 with and without an attached tape-like device.
- FIGURE 4a shows a cross-section of a prior art impact absorbing device and FIGURE 4b and FIGURE 4c show cross-sections of invention impact absorbing devices.

### Description of the preferred embodiments of the invention

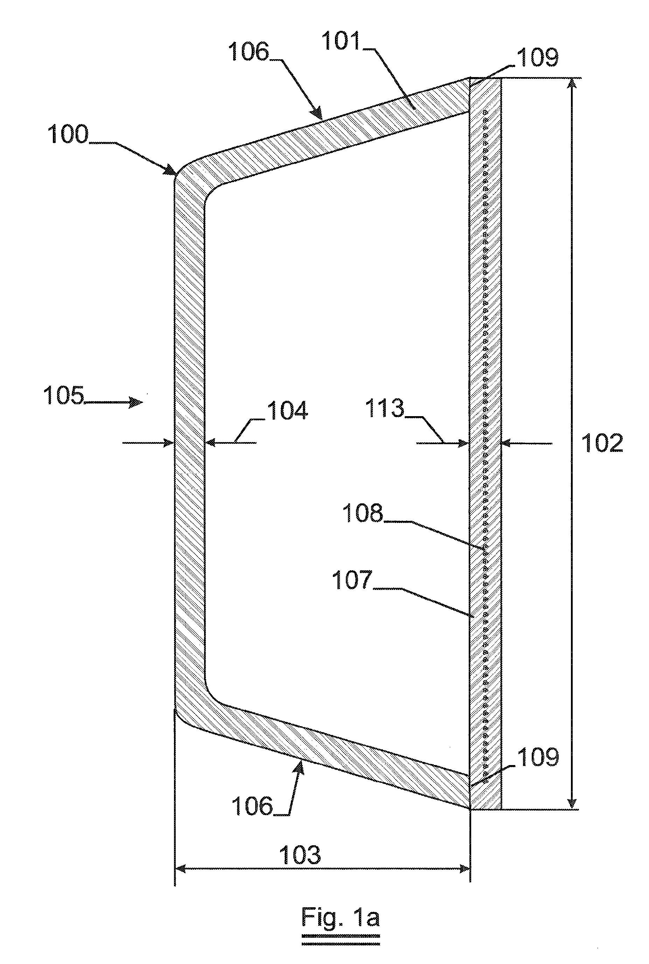

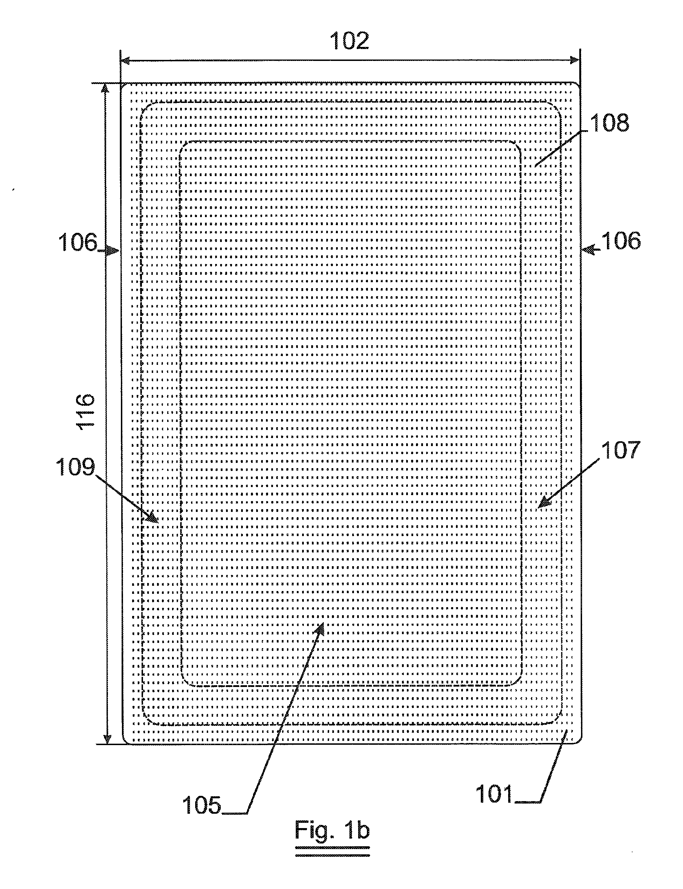

As shown in FIGURE 1a and FIGURE 1b, an impact absorbing means 100, whose matrix volume 101 being provided out of GMT comprising polypropylene and 40% weight random glass fibers and having a U-shape cross section with a wall thickness 104 of 5mm, a height 103 of 45mm, a width 102 of 90mm and a length 116 of 1480mm was provided. The impact absorbing means 100 has an impact surface indicated 105.

At the extremities 106 of the U-shape of matrix volume 101, a tape like device 107 comprising metal cords 108 was attached at the locations 109 where both matrix volume 101 and tape-like device 107 meet, so providing an impact absorbing device.

The metal cords 108 used to provide the tape-like device 107 were 3x0.26 + 9x0.245 steel cords. 89 cords equally spaced one from the other were used to provide a tape having a width, equal to the width of said impact absorbing device 102, being 90mm. Around these cords, a layer of polypropylene, having a thickness 113 of 2mm was provided by laminating 2 sheets of polypropylene around the cords. The cords were located substantially in the middle of this thickness 113.

The tape-like device 107 and the matrix volume101 of the impact absorbing device 100 were attached to each other by softening the polypropylene of the tape-like device 107, and laminating the tape-like device 107 to the extremities of the legs of the U-shaped matrix volume 101, where tape-like device 107 and matrix volume 101 are to attached.

Alternatively, tape-like device 107 and the matrix volume101 of the impact absorbing device 100 may be attached to each other by a hot melt adhesive Plastoflex® 9065, applied at the contact zones between tape-like device and impact absorbing device.

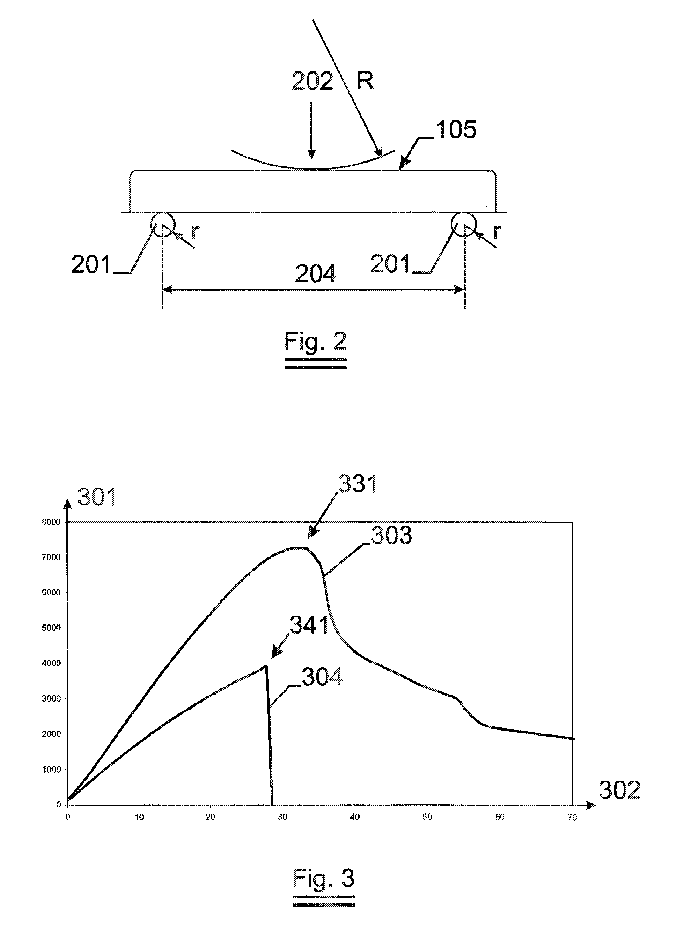

As shown in FIGURE 2, the impact absorbing means 100 with attached tape-like device was subjected to a deflection test. A force 202 was executed to the impact surface 105 of said impact absorbing device using a tube like pressing mold 203, having a radius R of 135mm. The impact absorbing device was supported by two supporting rods 201, whose axes are on a distance 204 of 900mm and having a radius r of 30mm.

FIGURE 3 shows schematically the force (Newton in ordinate 301) in function of the deflection (mm in abscissa 302) for both the impact absorbing device 100 with tape-like device attached by softening of the polymer material of the tape-like device and laminating it to the matrix volume (curve 303), and an identical impact absorbing device identical to the impact absorbing device 100, however without addition of the tape like device (curve 304).

The failure noticed at the point 331 of the test (curve 303) of the impact absorbing device 100 with tape-like device attached, was a rupture of the GMT of the impact absorbing device. The tape-like device was not loosened from the polymer of the impact absorbing device. The shearing strength between tape-like device and impact absorbing device was found to be higher than the cohesion strength of the GMT.

The impact absorbing device without tape-like device attached (curve 304) fails at a lower deflection and at a lower force applied. Failure is cracking of matrix volume at point 341.
It is clear that the impact absorbing device with tape-like device absorbs substantially more energy (surface between curve and abscissa), as compared to the one without tape-like device., next to the fact that the maximum force which could be withstand by the impact absorbing device is significantly higher as the identical impact absorbing device without tape-like device attached.

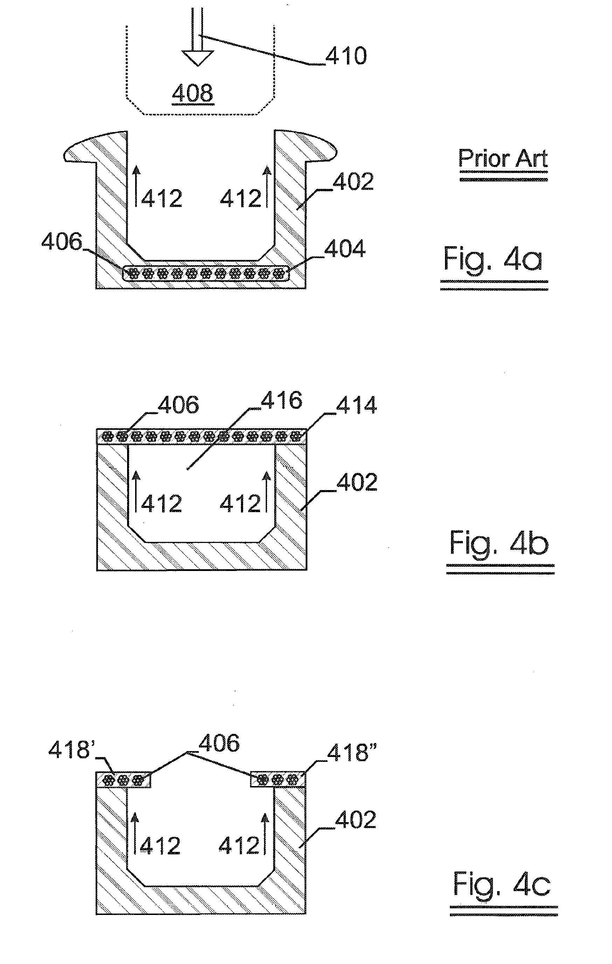

As already mentioned, the separate steps of first press-molding the matrix volume and thereafter attaching a reinforced tape-like device, allows a greater freedom in the design of impact absorbing devices and allows to obtain impact absorbing devices with geometries that are not obtainable with a single press-molding step. This is illustrated in FIGUREs 4a, 4b and 4c.

FIGURE 4a shows a prior art embodiment. A matrix material 402 already contains a tape 404 reinforced with steel cords 406. The matrix material 402 with the tape 404 is press-molded by means of a molds. Only the upper mold 408 is shown. The upper mold 408 exercises an action in the direction of arrow 410 and thus creates a concave part in the cross-section of this prior art impact absorbing device. This cross-section does not show so-called undercuts. This means that in a direction 412 opposite to the action 410 of the upper mold 408 no cross-sectional material of the impact absorbing device is met.

FIGURE 4b, similar to the cross-section of FIGURE 1a, shows a first type of embodiments according to the invention. The matrix material 402 - with or without reinforcing tapes or individual reinforcing elements - is press-molded so that it has a U-type shape. After this press-molding, a tape 414 reinforced by means of steel cords 406 is attached to the U-form of the matrix material 402. The cross-section shows an enclosed cavity 416, which is not the case with the prior art embodiment. In a direction 412 opposite to the action 410 of the upper mold 408 cross-sectional material of the impact absorbing device, more particularly material of the tape 414 is met.

FIGURE 4c illustrates a second type of embodiments according to the invention. Here again, a matrix material 402 - with or without reinforcing elements or reinforcing tapes - is press-molded so that a U-type of shape is obtained. Two strips 418' and 418" with steel cord or steel wire elements 406 are attached to both legs of the U-form. Unlike the embodiment of FIGURE 4b, there is not an enclosed cavity here. However, the embodiment shows so-called undercuts, which means that - although a totally enclosed cavity is not present - in a direction 412 opposite to the action 410 of the upper mold 408 cross-sectional material of the impact absorbing device, more particularly material of one the tapes 418' or 418" is met.

## Claims

1. A method of manufacturing an impact absorbing device (100) said method comprising the steps of
a) providing a matrix volume (101, 402);
b) providing a tape-like device (107, 414, 418', 418'') comprising elongated metal elements;
c) press-molding said matrix volume;
d) thereafter attaching said tape-like device to said press-molded matrix volume.

2. A method according to claim 1, wherein said matrix volume is a polymer matrix volume.

3. A method according to claim 2, wherein said polymer matrix volume is provided from polyolefins, polyamides, polyethylene, polypropylene, polyesters, polycarbonates, polyacetals, polysulfones, polyether ketones, polyimides and polyether-imides or polyesters.

4. A method according to any one of the preceding claims, wherein the shearing strength between said tape-like device and said matrix volume is larger than the cohesion strength of the matrix volume.

5. A method according to any one of the preceding claims, wherein said tape-like device is a woven fabric comprising said elongated metal elements in warp and/or weft direction.

6. A method according to any one of the preceding claims, wherein said tape-like device further comprises polymer matrix material which substantially envelops said elongated metal elements.

7. A method according to any one of the preceding claims, wherein said tape-like device is glued to said matrix volume.

8. A method according to claim 6, wherein said attaching step is done by partially melting or softening said polymer matrix material from said tape-like device, and bringing said partially molten polymer matrix material into contact with said matrix volume.

9. A method according to claim 6, wherein said attaching step is done by partially melting or softening at least one surface of said matrix volume, and bringing said tape-like device into contact with partially molten surface of said matrix volume of said impact absorbing device.

10. An impact absorbing device (100) comprising a matrix volume (101, 402) and a tape-like device (107, 414, 418', 418") said tape-like device comprising elongated metal elements and wherein said matrix volume is press-molded **characterized in that** said tape-like device is attached to the press-molded matrix volume.

11. An impact absorbing device as claimed in claim 10, wherein an interface is present between said matrix volume and said tape-like device, said interface comprising a glue for attaching said tape-like device to said matrix volume.

12. An impact absorbing device as claimed in claim 10 or 11, wherein the shearing strength between said tape-like device and matrix volume is larger than the cohesion strength of said matrix volume.

13. An impact absorbing device as in any one of the claims 10 to 12, wherein said tape-like device is a woven fabric comprising said elongated metal elements in warp and/or weft direction.

14. An impact absorbing device as in any one of the claims 10 to 13, wherein said impact absorbing device is a vehicle bumper beam.

15. An impact absorbing device as in any one of the claims 10 to 14, wherein said impact absorbing device is a vehicle door beam.

## Patentansprüche

1. Verfahren zum Herstellen einer stoßabsorbierenden Vorrichtung (100), wobei das Verfahren die folgenden Schritte umfasst:
a) Bereitstellen eines Matrixvolumens (101, 402);
b) Bereitstellen einer bandartigen Vorrichtung ((107, 414, 418', 418''), die längliche Metallelemente umfasst;
c) Pressformen des Matrixvolumens;
d) danach, Befestigen der bandartigen Vorrichtung an dem pressgeformten Matrixvolumen.

2. Verfahren nach Anspruch 1, wobei das Matrixvolumen ein Polymermatrixvolumen ist.

3. Verfahren nach Anspruch 2, wobei das PolymerMatrixvolumen von Polyolefinen, Polyamiden, Polyethylen, Polypropylen, Polyestern, Polycarbonaten, Polyacetaten, Polyschwefeln, Polyether-Ketonen, Polyimiden und Polyetherimiden oder Polyestern bereitgestellt wird.

4. Verfahren nach einem der vorherigen Ansprüche, wobei die Scherfestigkeit zwischen der bandartigen Vorrichtung und dem Matrixvolumen größer als die Kohäsionsfestigkeit des Matrixvolumens ist.

5. Verfahren nach einem der vorherigen Ansprüche, wobei die bandartige Vorrichtung ein Gewebe ist, das die länglichen Metallelemente in Kett- und/oder Schussrichtung umfasst.

6. Verfahren nach einem der vorherigen Ansprüche, wobei die bandartige Vorrichtung ferner ein Polymermatrixmaterial umfasst, das die länglichen Metallelemente im Wesentlichen umhüllt.

7. Verfahren nach einem der vorherigen Ansprüche, wobei die bandartige Vorrichtung auf das Matrixvolumen aufgeklebt ist.

8. Verfahren nach Anspruch 6, wobei der Befestigungsschritt durch teilweise Schmelzen oder Aufweichen des Polymermatrixmaterials von der bandartigen Vorrichtung und durch Inkontaktbringen des teilweise geschmolzenen Polymermatrixmaterials mit dem Matrixvolumen ausgeführt wird.

9. Verfahren nach Anspruch 6, wobei der Befestigungsschritt durch teilweise Schmelzen oder Aufweichen von mindestens einer Oberfläche des Matrixvolumens, und durch Inkontaktbringen der bandartigen Vorrichtung mit der teilweise geschmolzenen Oberfläche des Matrixvolumens der stoßabsorbierenden Vorrichtung durchgeführt wird.

10. Stoßabsorbierende Vorrichtung (100), umfassend ein Matrixvolumen (101, 402) und eine bandartige Vorrichtung (107, 414, 418', 418 "), wobei die bandartige Vorrichtung längliche Metallelemente umfasst und wobei das Matrixvolumen pressgeformt wird, **dadurch gekennzeichnet, dass** die bandartige Vorrichtung an dem pressgeformten Matrixvolumen befestigt ist.

11. Stoßabsorbierende Vorrichtung nach Anspruch 10, wobei eine Schnittstelle zwischen dem Matrixvolumen und der bandartigen Vorrichtung vorliegt, wobei die Schnittstelle einen Kleber zum Befestigen der bandartigen Vorrichtung an dem Matrixvolumen umfasst.

12. Stoßabsorbierende Vorrichtung nach Anspruch 10 oder 11, wobei die Scherfestigkeit zwischen der bandartigen Vorrichtung und dem Matrixvolumen größer als die Kohäsionsfestigkeit des Matrixvolumens ist.

13. Stoßabsorbierende Vorrichtung nach einem der Ansprüche 10 bis 12, wobei die bandartige Vorrichtung ein Gewebe ist, das die länglichen Metallelemente in Kett- und/oder Schussrichtung umfasst.

14. Stoßabsorbierende Vorrichtung nach einem der Ansprüche 10 bis 13, wobei die stoßabsorbierende Vorrichtung ein Fahrzeug-Stoßfänger ist.

15. Stoßabsorbierende Vorrichtung nach einem der Ansprüche 10 bis 14, wobei die stoßabsorbierende Vorrichtung ein Fahrzeug-Türträger ist.

## Revendications

1. Procédé de fabrication d'un dispositif amortisseur de chocs (100), ledit procédé comprenant les étapes suivantes:
a) fournir un volume de matrice (101, 402);
b) fournir un dispositif de type ruban (107, 414, 418', 418") comprenant des éléments métalliques allongés;
c) mouler à la presse ledit volume de matrice; et
d) attacher ensuite ledit dispositif de type ruban audit volume de matrice moulé à la presse.

2. Procédé selon la revendication 1, dans lequel ledit volume de matrice est un volume de matrice polymère.

3. Procédé selon la revendication 2, dans lequel ledit volume de matrice polymère est formé à partir de polyoléfines, de polyamides, de polyéthylène, de polypropylène, de polyesters, de polycarbonates, de polyacétals, de polysulfones, de cétones de polyéther, de polyimides et de polyéther-imides ou polyesters.

4. Procédé selon l'une quelconque des revendications précédentes, dans lequel la résistance au cisaillement entre ledit dispositif de type ruban et ledit volume de matrice est supérieure à la résistance de cohésion du volume de matrice.

5. Procédé selon l'une quelconque des revendications précédentes, dans lequel ledit dispositif de type ruban est un tissu tissé comprenant lesdits éléments métalliques allongés dans le sens de la chaîne et/ou de la trame.

6. Procédé selon l'une quelconque des revendications précédentes, dans lequel ledit dispositif de type ruban comprend en outre un matériau de matrice polymère qui enveloppe sensiblement lesdits éléments métalliques allongés.

7. Procédé selon l'une quelconque des revendications précédentes, dans lequel ledit dispositif de type ruban est collé audit volume de matrice.

8. Procédé selon la revendication 6, dans lequel ladite étape de fixation est exécutée en faisant fondre ou en ramollissant partiellement ledit matériau de matrice polymère en provenance dudit dispositif de type ruban, et en amenant ledit matériau de matrice polymère partiellement fondu en contact avec ledit volume de matrice.

9. Procédé selon la revendication 6, dans lequel ladite étape de fixation est exécutée en faisant fondre ou en ramollissant partiellement au moins une surface dudit volume de matrice, et en amenant ledit dispositif de type ruban en contact avec la surface partiellement fondue dudit volume de matrice dudit dispositif amortisseur de chocs.

10. Dispositif amortisseur de chocs (100) comprenant un volume de matrice (101, 402) et un dispositif de type ruban (107, 414, 418', 418"), ledit dispositif de type ruban comprenant des éléments métalliques allongés, et dans lequel ledit volume de matrice est moulé à la presse, **caractérisé en ce que** ledit dispositif de type ruban est attaché au volume de matrice moulé à la presse.

11. Dispositif amortisseur de chocs selon la revendication 10, dans lequel une interface est présente entre ledit volume de matrice et ledit dispositif de type ruban, ladite interface comprenant une colle pour attacher ledit dispositif de type ruban audit volume de matrice.

12. Dispositif amortisseur de chocs selon la revendication 10 ou 11, dans lequel la résistance au cisaillement entre ledit dispositif de type ruban et ledit volume de matrice est supérieure à la résistance de cohésion du volume de matrice.

13. Dispositif amortisseur de chocs selon l'une quelconque des revendications 10 à 12, dans lequel ledit dispositif de type ruban est un tissu tissé comprenant lesdits éléments métalliques allongés dans le sens de la chaîne et/ou de la trame.

14. Dispositif amortisseur de chocs selon l'une quelconque des revendications 10 à 13, dans lequel ledit dispositif amortisseur de chocs est une poutre de pare-chocs de véhicule.

15. Dispositif amortisseur de chocs selon l'une quelconque des revendications 10 à 14, dans lequel ledit dispositif amortisseur de chocs est une poutre de portière de véhicule.
